Europäisches Patentamt

European Patent Office

Office européen des brevets

(11) Numéro de publication: **0 112 732**
B1

# FASCICULE DE BREVET EUROPÉEN

(45) Date de publication du fascicule du brevet:
31.05.89

(21) Numéro de dépôt: 83401837.6

(22) Date de dépôt: 20.09.83

(51) Int. Cl.⁴: **G 02 B 6/12,** G 02 F 1/29,
G 02 F 1/35, G 02 F 1/37,
G 02 F 1/39

(54) Dispositif coupleur optique intégré non linéaire, et oscillateur paramétrique comprenant un tel dispositif.

(30) Priorité: 28.09.82 FR 8216297

(43) Date de publication de la demande:
04.07.84 Bulletin 84/27

(45) Mention de la délivrance du brevet:
31.05.89 Bulletin 89/22

(84) Etats contractants désignés:
DE GB IT NL SE

(56) Documents cité:
EP-A-0 031 263
FR-A-2 309 890
US-A-3 822 927

SOVIET JOURNAL OF QUANTUM ELECTRONICS,
vol. 10, no. 7, juillet 1980, pages 925-926, American
Institute of Physics, New York, US; A.A. MAIER:
"Phase matching of "coupled modes" and phasematched nonlinear interaction of waves in coupled
waveguides"

(73) Titulaire: THOMSON- CSF, 51, Esplanade du
Général de Gaulle, F-92800 Puteaux (FR)

(72) Inventeur: Papuchon, Michel, THOMSON- CSF
SCPI 173, bld. Haussmann, F-75379 Paris Cedex 08
(FR)

**Description**

La présente invention concerne un dispositif coupleur optique integré non linéaire et un oscillateur paramétrique comprenant un tel dispositif.

Un tel dispositif permet, sur commande électrique, de transférer entre deux guides d'ondes présentant une zone commune de couplage, totalité ou partie de l'energie lumineuse véhiculée par l'un d'entre eux; il permet également de moduler l'énergie lumineuse véhiculée par l'un des guides d'ondes.

On désigne sous le nom d'optique intégrée des structures monolithiques en couches minces destinées au traitement des signaux lumineux, qui sont obtenues par des techniques de dépôt, diffusion et gravure par masquage analogues à celles utilisées dans la réalisation des circuits intégrés électroniques. On sait notamment, par ces techniques, réaliser des structures linéaires caractérisées par un indice de refraction supérieur à celui du milieu environnant, et formant des guides d'ondes au long desquels la lumière se propage par une suite de réflexions totales ou de réfractions progressives.

Il est connu d'associer deux tels guides d'ondes en les disposant parallèlement l'un à l'autre sur une partie de leurs parcours pour réaliser des coupleurs directionnels cf. à titre d'exemple, FR-A-2 309 890; grâce au phénomène d'onde évanescente, l'énergie véhiculée dans le premier guide passe progressivement dans le second guide, et l'on observe un maximum de l'énergie transférée au bout d'une certaine longueur dite longueur de couplage qui dépend des paramètres géométriques et optiques de la structure, et notamment de la valeur des indices de réfraction des matériaux constituant les deux guides et le milieu qui les sépare, puis l'énergie repasse progressivement du second guide dans le premier et ainsi de suite. Il est également connu cf. également FR-A-2 309 890, en utilisant pour l'un des matériaux constituant les guides ou le milieu qui les sépare un matériau électro-optique, d'en faire varier l'indice sous l'action d'un champ électrique, ce qui permet, en agissant sur la longueur de couplage, de commander électriquement la portion d'énergie transférée d'un guide dans l'autre; on voit qu'il est également possible, sur ce même principe, de réaliser un modulateur de lumière en disposant parallèlement au guide qui véhicule l'onde lumineuse un tronçon de guide dans lequel on transfèrera une portion plus ou moins grande de cette énergie.

De plus, il existe des convertisseurs de fréquence destinés à engendrer, à partir d'un rayonnement électromagnétique guidé de fréquence $\omega$, un rayonnement électromagnétique guidé dont la fréquence est multiple de la fréquence $\omega$. Ces convertisseurs sont notamment utilisés dans le domaine de l'optique intégrée, ainsi désignée par analogie avec les circuits électroniques intégrés qui sont des structures monolithiques mettant en oeuvre des couches minces.

Particulièrement le document US-A-3 822 927 décrit un dispositif optique intégré convertisseur de fréquence qui comprend notamment un substrat en matériau non linéaire (GaP), recouvert par deux guides superposés également en matériau non linéaire (GaAs) séparés par une couche en un matériau non linéaire (GaP), le tout étant agencé pour permettre ladite conversion de fréquence.

Il est connu que la propagation d'une onde électromagnétique de fréquence $\omega$ dans un matériau anisotrope, tel que les cristaux biréfringents de phosphate de potassium (KDP), donne naissance à des ondes harmoniques de fréquence $p.\omega$ (p entier, p > 2). Cependant, la plus grande partie d'énergie émergente reste à la fréquence fondamentale $\omega$ ce qui indique que le rendement de conversion est généralement médiocre. Un tel phénomène non linéaire se produit également lors de la réfraction, et la réflexion qui l'accompagne, d'un faisceau lumineux sur un inter face séparant deux milieux d'indices de réfraction différents toutefois, l'intensité du phénomène de conversion est très inférieure à celle du cas précédent.

Dans le domaine de l'optique intégrée, il se pose un problème pour l'utilisation de ce phénomène non linéaire en vue d'obtenir un rendement de conversion suffisant, du fait que le dépôt de matériau anisotrope en couches minces n'est pas réalisable à l'aide des techniques classiques utilisées pour la fabrication des circuits électroniques intégrés.

Le dispositif de l'invention par rapport aux dispositifs de couplage linéaire permet donc la génération d'une onde à une fréquence différente de celle de l'onde incidente. Le couplage entre deux guides s'effectue pour des ondes de longueurs d'onde différentes qui ont des constantes de propagation normalisées (indices effectifs) identiques dans ces guides.

L'invention présente en outre l'avantage, par rapport aux autres dispositifs de couplage non linéaires de permettre la séparation spatiale de l'onde incidente et des ondes générées par effet non linéaire, ces ondes se propageant dans des guides différents.

L'invention permet d'utiliser les coefficients non linéaires très importants de certains matériaux tels que le coefficient $\chi_{333}$ de susceptibilité non linéaire d'ordre 3 dans le niobathe de lithium (LiNbO$_3$) ou dans le tantalate de lithium (LiTaO$_3$), ce qui permet une plus grande efficacité d'interaction entre les guides et il permet d'obtenir une densité d'énergie optique très grande pour une puissance lumineuse relativement faible.

Enfin, l'interaction peut être réglée à l'aide d'un champ électrique appliqué aux guides d'ondes, ce qui permet de régler l'accord de phase entre les ondes transmises par ces différents guides. L'invention peut être utilisée aussi bien dans le cas d'interactions non linéaires simples telles que la génération de second harmonique que dans des interactions plus complexes telles que celles mises en jeu dans l'oscillateur paramètrique.

L'invention a pour objet un dispositif coupleur optique intégré non linéaire destiné à engendrer, à partir d'une onde incidente de fréquence donnée ($\omega$; $\omega_p$) au moins une onde de fréquence différente ($2\omega$; $\omega_s$, $\omega_1$), ledit dispositif comportant un substrat plan ayant une face d'entrée et une face de sortie, fait en un matériau électro-optique non linéaire, et au moins deux guides d'onde dont l'un est destiné à recevoir ladite onde incidente, également faits en un matériau électro-optique non linéaire, lesdits guides d'onde étant agencés l'un par rapport à l'autre et par rapport audit substrat de façon telle que l'onde incidente reçue par l'un d'eux puisse interagir via son champ évanescent avec le matériau électrooptique non linéaire de façon à générer dans l'autre guide ladite onde de fréquence différente, caractérisé en ce que lesdits guides d'onde sont disposés chacun à la surface dudit substrat, ces guides étant parallèles entre eux sur une longueur prédéterminée en étant séparés l'un de l'autre par une distance telle qu'elle permet ladite interaction non linéaire propre à entraîner la conversion de fréquence désirée, et en ce que ledit substrat est fait en niobate de lithium ou en tantalate de lithium, un premier desdits guides étant susceptible d'être obtenu par échange ionique d'ions H+ dans ledit substrat, et le second desdits guides par diffusion localisée de titane dans ledit substrat.

L'invention a également pour objet un oscillateur paramètrique comprenant un tel dispositif.

L'invention sera mieux comprise au moyen de la description ci-après et des figures annexées parmi lesquelles:

- les figures 1 et 2 représentent une vue en coupe et une vue de dessus d'un dispositif de l'art connu;
- la figure 3 illustre le dispositif de l'invention;
- la figure 4 illustre une variante du dispositif de l'invention;
- la figure 5 illustre un oscillateur paramétrique comprenant le dispositif de l'invention;
- la figure 6 illustre une variante de l'oscillateur paramétrique représenté en figure 5.

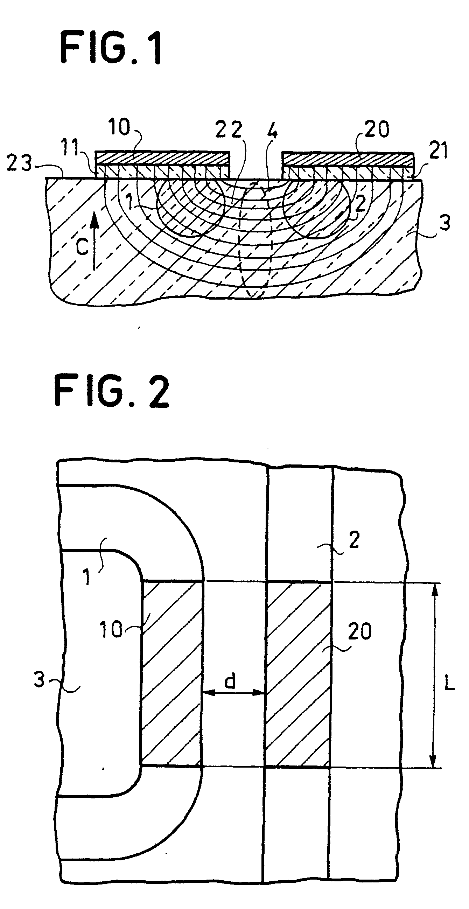

Les figures 1 et 2 représentent respectivement une vue en coupe et une vue de dessus d'un commutateur connu realisé en optique linéaire. Les deux guides d'ondes lumineuses 1 et 2 sont insérés dans le substrat; le matériau par l'intermédiaire duquel s'effectue le couplage est celui constituant le substrat. Pour implanter les guides 1 et 2, il est possible, à titre d'exemple, de faire diffuser du titane dans un substrat constitué d'une plaquette monocristalline de niobate de lithium (LiNbO$_3$). Le titane, dans la zone de diffusion, se substitue partiellement au niobium pour donner un composé mixte de formule LiTi$_x$Nb$_{1-x}$O$_3$, présentant un indice de réfraction supérieur à celui du niobate pur ces zones diffusées, d'indice supérieur à celui du substrat, contituent les guides d'ondes 1 et 2. Si la température de diffusion est supérieure au point de curie du matériau, on profite de la phase de refroidissement consécutive pour soumettre la plaquette à un champ électrique uniforme, de façon à. polariser uniformément la plaquette et à créer ainsi une structure "mono-domaine".

Lorsqu'une tension est appliquée entre les électrodes 10 et 20, il se crée une distribution des lignes de champ montrée sous la référence 4 par la figure 1. La composante du champ suivant la direction C perpendiculaire à la surface 23 du substrat a dans l'un et l'autre guide, même valeur absolue et direction opposée, entraînant des variations de l'indice de réfraction de même valeur absolue et de signes contraires. Néanmoins, l'existence suivant une direction perpendiculaire à la direction de l'axe C du substrat, qui porte son indice extraordinaire, d'une composante du champ non nulle, ainsi que le fait que le champ électrique appliqué fait également varier la valeur de l'indice dans la partie du substrat 22 comprise entre les deux guides entraîne une certaine dissymétrie du phénomène le couplage obtenu varie suivant la polarité de la tension appliquée entre les électrodes 10 et 20. La polarité de la tension fournissant le couplage maximum peut se déduire de l'orientation cristallographique du matériau composant le substrat. Si cette orientation est inconnue, il est extrêmement aisé de déterminer expérimentalement la polarité optimale par une mesure de l'intensité lumineuse transmise par un des guides pour deux polari tés de signes contraires.

Si les électrodes métalliques sont déposées directement à la surface des guides, l'existence d'une onde évanescente se propageant dans le milieu métallique, relativement absorbant, peut entraîner des pertes d'énergie dans le coupleur. Pour les éviter, il est possible d'intercaler, comme représenté dans la figure 1 une couche diélectrique transparente 11 et 21 entre les guides 1 et 2 et les électrodes 10 et 20. Cette couche isolante est réalisée dans un matériau présentant une bonne transmission pour la longueur d'onde lumineuse véhiculée par le guide, et un indice de réfraction inférieur à celui du guide. La silice (SiO$_2$) constitue un matériau parfaitement adapté dans le cas précédemment décrit ou le substrat est constitué par du niobate de lithium.

Ces deux guides comme le montre la figure 2, sont parallèles entre eux sur une partie rectiligne de longueur L, fonction du paramètre dit longueur de couplage qui sera défini ultérieurement; la distance entre les parties parallèles rectilignes présente une valeur d qui ne doit pas excéder quelques longueurs d'onde (calculée dans le milieu qui sépare les deux guides) de la lumière véhiculée par les guides. Les deux guides sont constitués par un même matériau électro-optique, qui soumis à un champ électrique, possède un indice de réfraction variable en fonction de la valeur du champ appliqué. L'indice de réfraction de ce matériau est ainsi choisi que, même en présence du champ électrique appliqué, il demeure supérieur à l'indice du matériau constituant le substrat 3.

Du fait du caractère électro-optique du matériau constituant les guides 1 et 2, la distribution des lignes de champ dans les guides produit au sein de ceux-ci des variations de l'indice de réfraction sensiblement égales en valeur absolue, mais de signes contraires.

Or, lorsqu'une onde est véhiculée par un guide, une partie de l'énergie se propage en dehors du guide, dans le milieu qui l'entoure sous forme d'une onde évanescente; l'amplitude de cette onde décroît exponentiellement lorsque l'on s'éloigne des parois du guide. Si un second guide est dispose parallèlement au premier, il capte progressivement, par le biais de cette onde évanescente, l'énergie véhiculée dans le premier guide, et ceci d'autant plus rapidement que les deux guides sont plus rapprochés. Au bout d'une distance donnée, dite longueur de couplage, qui dépend à la fois des paramètres géométriques et optiques des deux guides et du milieu qui les sépare (et notamment des indices de réfraction), un maximum d'énergie a été transférée du premier guide dans le second au-delà de cette longueur, le phénomène inverse se produit l'énergie se transfère progressivement du second guide dans le premier, jusqu'à atteindre une valeur minimale dans le second guide toute modification de l'indice d'un des milieux en présence agit évidemment dans un sens ou dans l'autre, sur la longueur de couplage.

Dans le dispositif représenté par les figures 1 et 2, la longueur L peut être choisie égale à la longueur de couplage en l'absence de champ électrique appliqué. Du fait de la parfaite symétrie des deux guides dans la zone de couplage, le transfert d'énergie est total du premier vers le second guide (ou du second vers le premier). L'application d'une tension entre les électrodes 20 et 21 diminue la longueur de couplage, et une partie de l'énergie est retransférée du second guide vers le premier (ou du premier vers le second). Le résultat global est alors qu'au fur et à mesure que la tension augmente l'énergie transférée du premier guide vers le second, (ou du second vers le premier), mesuree à l'extrémité de la zone de couplage, diminue jusqu'à atteindre une valeur nulle. Le couplage entre les deux guides décroît ainsi de 100 % à 0 % lorsque la tension appliquée aux électrodes croît. Le résultat serait identique si l'on donnait à la longueur L une valeur égale à un multiple impair de la longueur de couplage sous champ nul.

Il est également possible de donner à la longueur Lune valeur égale à un multiple pair de la longueur de couplage sous champ nul. Le couplage croît alors à partir de zéro, lorsque la tension appliquée entre les électrodes croît à partir de zéro.

On a ainsi réalisé un dispositif qui, sur commande d'un signal électrique, permet de commuter partie ou totalité de l'énergie véhiculée par un guide vers l'autre guide qui lui est associé dans la zone de couplage.

Il va alors de soi que si l'on limite l'un des deux guides à un tronçon ayant comme longueur minimale la longueur L de la zone de couplage, ce dispositif permet de moduler à 100 % l'énergie véhiculée par l'autre guide.

Mais il est aussi possible de travailler en optique non linéaire; en effet contrairement au dispositif de l'art connu qui vient d'être décrit, le dispositif de l'invention concerne un coupleur directionnel non linéaire optique intégré. Le couplage entre deux guides d'ondes est réalisé, par l'intermédiaire des ondes évanescentes se propageant dans le milieu séparant les deux guides, mais aussi, par l'intermédiaire d'une interaction non linéaire dans le substrat où sont réalisés les guides d'ondes.

Autrement dit, le couplage entre ces deux guides ne s'effectue que pour des ondes de longueurs d'ondes différentes qui ont des constantes de propagation normalisées (indices effectifs) identiques dans les deux guides.

Une telle structure permet de séparer spatialement les ondes de pompe et les ondes générées par effet non linéaire, les deux ondes se propageant dans des guides différents.

De plus, on peut utiliser des coefficients non-linéaires très importants dans certains matériaux tel que le dans le niobate de lithium ($LiNbO_3$) ou le tantalate de lithium ($LiTaO_3$).

Enfin, l'interaction peut être réglée à l'aide d'un champ électrique appliqué aux guides d'ondes pour réaliser l'accord de phase entre les modes guidés.

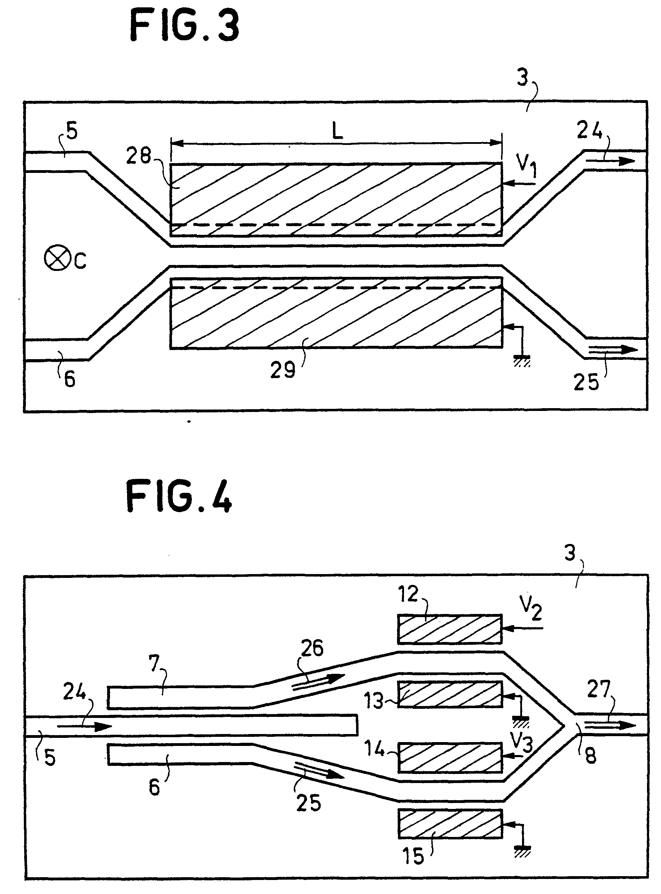

On appelle onde de pompe, l'onde de fréquence $\omega$ qui fournit de l'énergie, c'est à dire sur la figure 3 l'onde qui est transmise dans le premier guide 5. La polarisation induite dans l'onde pompe est de la forme:

$$P = \chi_1 E + \chi_2 EE + \chi_3 EEE + ...$$

E étant le champ électrique auquel est soumis le guide et qui induit la polarisation P.

Le terme $\chi_2 EE$ est un terme à la fréquence $2\omega$ qui peut s'écrire:

$$_e i(2\omega t - 2\beta(\omega)z)$$

Dans le deuxième guide 6, une onde de fréquence $2\omega$ va se propager: elle est de la forme

$$_e i(2\omega t - \beta(2\omega)z)$$

Ainsi, si on prend l'exemple de la génération de second harmonique $2\omega$ dans un cristal non linéaire obtenue par couplage entre deux guides d'ondes, la puissance générée à la fréquence $2\omega$ à partir d'un rayonnement électromagnétique guidé de fréquence $\omega$ dans le premier guide s'écrit:

$$P(2\omega) \propto AL^2 d^2 \left(\frac{\sin\Delta\beta L/2}{\Delta\beta L/2}\right)^2 \frac{P^2(\omega)}{S}$$

où A est une constante dépendant du substratutilisé, $P(\omega)$ la puissance de la pompe, S la surface sur laquelle a lieu l'interaction, L est la longueur d'interaction et d le coefficient non linéaire utilisé, $\Delta\beta$ représente la différence $2\beta(\omega) - \beta(2\omega)$ entre les deux constantes de propagation longitudinales.

En effet dans un guide d'onde quelconque, il est connu que l'énergie rayonnée ne peut se propager que selon un nombre discret de modes de propagation caractérisés chacun par une distribution du champ

4

électromagnétique particulière par ailleurs, la vitesse de propagation de l'énergie dans le guide possède une valeur définie. A cette vitesse correspond une constante de propagation longitudinale $\beta = \omega / V_p$, $V_p$ étant la vitesse de phase, tels qu'à l'instant t et à l'abscisse z, les champs électrique E et magnétique H d'une onde plane électromagnétique de fréquence $\omega$ soient de la forme A.

$$e^{i(\beta z - \omega t)},$$

A étant une amplitude complexe. Cette grandeur $\beta$ dépend notamment d'une part de l'indice de réfraction du milieu constituant le guide, cet indice étant lui-même fonction de la fréquence $\omega 7$ ou p.$\omega$ de l'onde s'y propageant, et d'autre part de l'épaisseur du guide.

$P(2\omega)$ est maximum quand

$$\left(\frac{\sin \Delta\beta L/2}{\Delta\beta L/2}\right)^2$$

est égal à 1, c'est à dire quand $\Delta\beta = 0$ (accord de phase), où

$$\beta(2\omega) = \left(\tfrac{2\pi}{\lambda} n_{ef}\right)(2\omega) \text{ et } \beta(\omega) = \left(\tfrac{2\pi}{\lambda} n_{ef}\right)(\omega),$$

$n_{ef}$ étant l'indice effectif dans le guide d'onde.

Dans un milieu massif cette dernière condition est équivalente à poser $n_{ef}(\omega) = n_{ef}(2\omega)$, ce qui est en général impossible dans des régions de dispersion normale. Pour réaliser cette condition, on utilise la bi-réfringence de certains matériaux tels que le phosphate deutéré de potassium ($KD_2P_{04}$), le niobate de lithium ($LiNbO_3$) conjointement à des réglages avec la température ou la direction de propagation par rapport aux axes du cristal. Dans les guides d'ondes, on peut en plus espérer profiter de la dispersion modale pour réaliser l'accord de phase.

La combinaison de ces différents principes a amené à la réalisation de doubleurs de fréquence et oscillateurs paramétriques aussi bien en optique classique qu'en optique guidée.

Dans le dispositif de l'invention, on utilise la dispersion modale en réalisant l'interaction dans deux guides d'ondes optiques intégrés formant un coupleur directionnel, ces deux guides étant réalisés avec des processus différents.

Comme représenté à la figure 3, on considère alors l'exemple de la génération de second harmonique $2\omega$. Supposons que l'on sache réaliser deux guides d'ondes 5 et 6, que l'on indicera dans la suite I et II, dans lesquels on peut vérifier (condition pour avoir l'accord de phase):

$$(2\beta\,I)(\omega) = (\beta\,II)(2\omega)$$
soit:

$$(\beta\,I/K)(\omega) = (\beta\,II/K)(2\omega)$$

K étant le nombre d'onde de la lumière dans le vide.

Si on rapproche ces deux guides à une distance de l'ordre de quelques longueurs d'ondes (quelques micromètres), on forme un coupleur directionnel. Ce dernier est d'un type assez particulier car, les deux guides ne sont resonnants que pour deux ondes guidées de fréquences différentes: l'une 24 se propageant dans le premier guide 5 à la fréquence $\omega$ l'autre 25 se propageant dans le second guide 6 à la fréquence $2\omega$. En général on aura:

$$(\beta\,I/K)(\omega) \neq (\beta\,II/K)(\omega)$$
et:

$$(\beta\,II/K)(2\omega) \neq (\beta\,I/K)(2\omega)$$

Le coupleur n'est donc résonnant que pour l'onde 24 de fréquence $\omega$ se propageant dans le premier guide 5 et l'onde 25 de fréquence $2\omega$ se propageant dans le deuxième guide 6. On conçoit que si un matériau électro-optique est utilisé, on va pouvoir faire varier les indices de réfraction des guides d'ondes et finalement modifier les fréquences $\omega$ et $2\omega$ pour lesquelles ces deux guides sont résonnants.

Si le matériau dans lequel sont fabriqués les guides est non linéaire optiquement on conçoit alors que si une onde de pompe à la fréquence $\omega$ est injectée dans le premier guide 5 elle va générer, par l'intermédiaire du coefficient non linéaire utilisé et du couplage interguide, une onde à la fréquence $2\omega$ qui va se propager dans le deuxième guide 6. Notons que comme:

$$(\beta\,I/K)(\omega) \neq (\beta\,II/K)(\omega)$$

l'onde de pompe 24 de fréquence ω n'est pas couplée dans le deuxième guide 6 (ou d'une façon négligeable), il en est de même pour l'onde 25 de fréquence 2ω qui n'est pas couplée dans le premier guide 5.

Comme l'interaction est en accord de phase, l'onde à fréquence 2 voit son intensité augmenter avec la longueur d'interaction L. A la sortie, il suffit de séparer les guides spatialement pour séparer ainsi également l'onde de fréquence ω et l'onde de fréquence 2ω. L'intensité de l'onde à la fréquence 2ω peut être réglée électriquement par l'intermédiaire d'électrodes 28, 29 du type "COBRA". Le "COBRA" est un commutateur électro-optique rapide, commandable par des signaux électriques de puissance relativement faible, applicable aux circuits électro-optiques intégrés par l'intermédiaire d'électrodes déposées à la surface du substrat de part et d'autre de deux guides d'onde. En effet, ce commutateur comporte deux guides d'énergie rayonnée déposés sur un même substrat, parallèles sur une longueur de couplage prédéfinie l'application d'un champ électrique de commande faisant varier l'indice de réfraction des guides l'un par rapport à l'autre et, par suite, assurant un couplage maximum ou minimum entre les deux guides.

On ne peut réaliser l'accord de phase entre deux ondes véhiculées par les deux guides en utilisant deux guides obtenus par diffusion de titane, en effet les deux plages

$$n_e(\omega) - (n_e(\omega) + \Delta\, n_e(\omega) \text{ et } n_e(2\omega) - (n_e(2\omega) + \Delta n_e(2\omega)$$

sont dissociées (ne étant l'indice extraordinaire).

Pour réaliser cet accord dans un cristal de niobate de lithium (LiNbO$_3$), l'un des guides 6 est réalisé par diffusion de titane et l'autre 5 par échange ionique (par exemple H$^+$) qui permet d'augmenter l'indice extraordinaire n$_e$ dans de grandes proportions:
- le deuxième guide 6 est réalisé par diffusion de titane;
- le premier guide 5 est réalisé par échange ionique par exemple d'ion H$^+$,

on a alors:

$$(n_e + \Delta\, n_e)_I\, (\omega) > n_{eII}\, (2\omega)$$

avec n$_e$ = indice extraordinaire du substrat, et
n$_e$ + $\Delta$n$_e$ = indice extraordinaire maximum dans la zone guidante.

Il y a donc recoupement des deux plages, contrairement donc au cas de la dispersion normale dans un cristal massif (interaction non guidée) où l'on a:

$$n_e(2\omega) >> n_e(\omega)$$

De plus, l'échange ionique permettant d'obtenir des variations d'indice très importante ($\Delta n_e \sim 0{,}12 - 0{,}15$) on a alors:

$$(n_e + \Delta\, n_e)_I\, (\omega) > (n_e + \Delta\, n_e)_{II}\, (2\omega)$$

Ce qui signifie que la condition d'accord de phase: $(\beta\, I/K)(\omega) = (\beta\, II/K)(2\omega)$, qui relie les indices effectifs des modes transmis, est réalisable.

Les deux guides 5 et 6 n'ont pas forcément des largeurs égales, mais les constantes de propagation normalisées (indices effectifs) de l'onde I à la fréquence ω dans le premier guide 5 et de l'onde II à la fréquence 2ω dans le deuxième guide 6 sont égales.

Lorsque cette condition d'accord de phase est réalisée, le coupleur est résonnant, et on peut avoir échange d'énergie entre les deux guides 5 et 6 pour une onde de fréquence ω dans le guide 5 et une onde de fréquence 2ω dans le guide 6. En sortie on retrouve des ondes séparées à ces deux fréquences ω et 2ω. En effet il n'y a pas d'échange à la fréquence ω entre les deux guides, et il n'y en a pas, non plus, à la fréquence 2ω.

En effet en général:

$$\left(\tfrac{\beta\, I}{K}\right)(\omega) \neq \left(\tfrac{\beta\, II}{K}\right)(\omega)$$
et

$$\left(\tfrac{\beta\, I}{K}\right)(2\omega) \neq \left(\tfrac{\beta\, II}{K}\right)(2\omega)$$

On peut alors jouer sur la polarisation appliquée aux électrodes pour régler ou dérégler cet accord de phase. Cette polarisation est parallèle à l'axe C du cristal qui est l'axe de l'indice extraordinaire du substrat.

Dans ce cas les deux ondes seront polarisées extraordinaires, car l'échange ionique augmente seulement n$_e$, et on pourra donc utiliser le coefficient non linéaire $\chi_{333}$ qui est le plus grand du niobate de lithium (LiNbO$_3$) et qui n'est pas utilisable dans les dispositifs de l'art connu à cause des problèmes non résolus d'accord de phase.

Les mêmes résultats peuvent être obtenus avec du tantalate de lithium (LiTaO$_3$).

Le procédé décrit ci-dessus peut être utilisé dans une configuration plus complexe d'un coupleur directionnel non linéaire à 3 guides. Dans ce cas, comme représenté à la figure 4, on utilise un deuxième guide 7 obtenu par diffusion de titane identique au guide 6 dans lequel est également créée une onde à la fréquence 2ω. On profite ainsi des deux ondes évanescentes existant de part et d'autre du guide 5.

Il faut noter que les deux guides 6 et 7 représentés à la figure 4 où se propagent l'onde de fréquence 2ω peuvent ensuite être recombinés dans un guide monomode de sortie unique 8. Des électrodes 12, 13, 14, 15 permettent de régler la phase relative des deux ondes 25 et 26 avant leur recombinaison 27 dans le guide de sortie 8.

Dans cette configuration, l'efficacité de l'interaction est naturellement supérieure à celle obtenue dans l'exemple précédent.

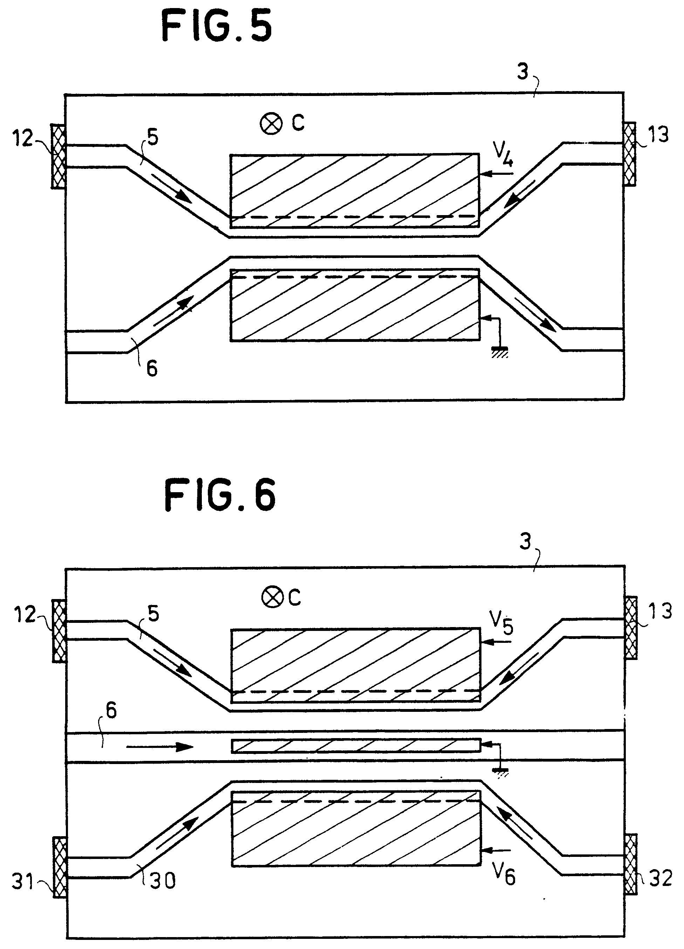

On peut utiliser le même type de coupleur que celui décrit précédemment pour réaliser un oscillateur paramétrique qui est représenté en figure 5. En effet une onde de pompe intense de fréquence $\omega_p$ envoyée dans un milieu non-linéaire est susceptible de donner naissance à une polarisation contenant deux ondes de fréquences $\omega_i$ et $\omega_s$, telles que $\omega_p = \omega_j$. Ces phénomènes sont identiques dans leur principe à ceux mis en jeu dans l'amplification paramétrique des courants alternatifs. Par analogie $\omega_p$ est dite onde de pompe, c'est-à-dire qui fournit de l'énergie au système, $\omega_i$ et $\omega_s$ qui jouent des rôles symétriques sont dites l'onde "signal" et l'onde "idler".

On peut mettre alors à profit l'amplification paramétrique pour réaliser des oscillateurs, en incorporant le milieu non-linéaire dans une cavité analogue à celle d'un laser. Ces "oscillateurs paramétriques", dont l'émission offre les mêmes propriétés de cohérence que celle des lasers, présentent l'intérêt que l'on peut faire varier leur fréquence de façon continue. En effet, $\omega_p$ étant donné, il faut trouver deux ondes et $\omega_i$ et $\omega_s$ respectant les conditions du début. De plus, si l'on veut constituer un oscillateur à $\omega_i$ la direction du vecteur d'onde $k_i$ sera imposée par la cavité.

Si par exemple une onde $\omega_p$ est envoyée comme onde extraordinaire dans un cristal de phosphate deutéré de potassium (KDP), on montre alors qu'il existe, pour chaque valeur de $k_s$, un couple d'ondes ordinaires $(\omega_i, \omega_s)$ telles que $\omega_i + \omega_s = \omega_p$, et vérifiant $k_i + k_s = k_p$ avec des directions données de $k_i$ et $k_p$. Les valeurs de $\omega_i$, $\omega_s$ sont imposées en ajustant l'angle $\Theta$ du cristal par rapport a la direction de $\omega_p$, ce qui change $k_p$, qui dépend de $\Theta$ pour une onde extraordinaire, ou encore en modifiant la température du cristal.

Ainsi sur la figure 5 l'onde de pompe $\omega_p$ se propage ici dans le guide 6 et les ondes signal $\omega_s$ et "idler" $\omega_i$ seront créées dans le guide 5 suivant les conditions:

$$\omega_s + \omega_i = \omega_p$$

$$\beta^I(\omega_s) + \beta^I(\omega_i) = \beta^{II}(\omega_p)$$

(Notons que d'autres combinaisons doivent être possibles par exemple $\omega_s$ dans le guide 5 et $\omega_i$ et $\omega_p$ dans le guide 6...).

Si le gain est suffisant on peut faire osciller le dispositif en créant une contre-réaction dans le guide 5 (ou guide 5 et guide 6) en réalisant par exemple des dépôts réfléchissants 12 et 13 à $\omega_s$ et $\omega_i$ sur les tranches d'entrée et de sortie du guide 5. Les longueurs d'onde d'émission du dispositif sont conditionnées par les relations énoncées ci-dessus. En particulier on peut modifier celles-ci par l'action d'un champ électrique qui modifiera les indices de réfraction des deux guides et donc les conditions d'accord de phase. On peut ainsi réaliser un oscillateur paramétrique dont la longueur d'onde est réglable électriquement. Cet oscillateur peut être du type simplement (à la fréquence $\omega_s$) ou doublement (aux fréquences $\omega_s$ et $\omega_i$) résonnant suivant les dispositifs utilisés pour assurer la contre-réaction.

Ainsi on peut réaliser un oscillateur paramétrique sortant des ondes aux fréquences $\omega_p$, $\omega_s$ et $\omega_i$ qui sont telles que:

$$\omega_p = \omega_s + \omega_i$$
et

$$\left(\tfrac{\beta}{k}\right)(\omega_p) = \left(\tfrac{\beta}{k}\right)(\omega_s) + \left(\tfrac{\beta}{k}\right)(\omega_i)$$

qui traduisent l'accord de phase.

En faisant varier les indices de ces deux guides d'onde (par action d'un champ électrique), on va faire varier ces fréquences. Ainsi sur la figure 5, on a réalisé un tel oscillateur en utilisant la même technologie que pour le coupleur représenté en figure 3, c'est-à-dire que le guide 6 est réalisé par diffusion de titane dans le substrat et le guide 5 par échange ionique par exemple d'ions $H^+$ dans ce même substrat. Dans ce cas aussi, on peut utiliser le coefficient $\chi_{333}$ très important dans le niobate de lithium. En jouant sur la position des électrodes, et sur la tension qui leur est appliquée on peut faire varier la fréquence des ondes de sortie. On peut aussi mettre en oeuvre une amélioration qui est illustrée à la figure 6, dans laquelle le guide 6 obtenu par diffusion de titane est situé entre deux guides 5 et 30 obtenus par échange ionique. Deux dépôts réfléchissants 12, 13, 31, 32 sont réalisés respectivement sur les faces d'entrée et de sortie des guides 5 et 30. Ainsi dans le guide 5 on a des ondes de fréquences et $\omega_s$ et $\omega_i$, dans le guide 30 des ondes de fréquence $\omega_{s'}$ et $\omega_{i'}$.

Dans tous les cas de figures considérés dans l'invention, on peut effectuer un réglage des guides d'onde en jouant sur la température, en effet la diffusion du titane dans le substrat s'effectue aux environ de 1000° C pendant un laps de temps de quelques heures et l'échange ionique par exemple d'ions $H^+$ s'effectue aux environs de 250°C pendant une durée de l'ordre de 1 heure.

Les guides considérés dans l'invention ne sont pas forcément des guides monomodes, les fréquences considérées étant celles de modes qui sont transmis dans les guides.

## Revendications

1. Dispositif coupleur optique intégré non-linéaire destiné à engendrer, à partir d'une onde incidente (24) de fréquence donnée ($\omega$; $\omega_p$), au moins une onde (25, 26) de fréquence différente ($2\omega$; $\omega_s$, $\omega_i$), ledit dispositif comportant un substrat plan (3) ayant une face d'entrée et une face de sortie, fait en un matériau électro-optique non linéaire, et au moins deux guides d'onde (5, 6, 7, 30) dont l'un (5, 6) est destiné à recevoir ladite onde incidente, également faits en un matériau électro-optique non linéaire, lesdits guides d'onde étant agencés l'un par rapport à l'autre et par rapport audit substrat de façon telle que l'onde incidente reçue par l'un d'eux puisse interagir via son champ évanescent avec le matériau électro-optique non linéaire de façon à générer dans l'autre guide ladite onde de fréquence différente, caractérisé en ce que lesdits guides d'onde sont disposés chacun à la surface dudit substrat, ces guides étant parallèles entre eux sur une longueur prédéterminée (L) en étant séparés l'un de l'autre par une distance telle qu'elle permet ladite interaction non linéaire propre à entraîner la conversion de fréquence désirée, et en ce que ledit substrat est fait en niobiate de lithium ou en tantalate de lithium, un premier (5, 30) desdits guides étant susceptible d'être obtenu par échange ionique d'ions H+ dans ledit substrat (3), et le second (6, 7) desdits guides par diffusion localisée de titane dans ledit substrat.

2. Dispositif selon la revendication 1 destiné à engendrer une onde (25) de fréquence $2\omega$ à partir d'une onde incidente (24) de fréquence $\omega$, caractérisé en ce que ledit premier guide (5) est destiné à recevoir ladite onde incidente (24) de fréquence $\omega$, cependant que ledit second guide (6) est destiné à transmettre ladite onde (25) de fréquence $2\omega$ créée par couplage, ledit dispositif comportant en outre des moyens pour appliquer un champ électrique variable à au moins un de ces deux guides dans la partie où ils sont parallèles entre eux pour effectuer ainsi l'accord de phase entre l'onde incidente (24) de fréquence $\omega$ et l'onde (25) de fréquence $2\omega$ créée par couplage.

3. Dispositif selon la revendication 2, caractérisé en ce que, le substrat étant réalisé en matériau biréfringent, ces moyens pour appliquer un champ électrique variable à au moins un des deux guides sont constitués par des électrodes (28, 29) disposées de part et d'autre de ce guide, ces électrodes créant dans le substrat une polarisation parallèle à l'axe qui porte l'indice extraordinaire de ce substrat (3).

4. Dispositif selon la revendication 2, caractérisé en ce qu'il comporte un troisième guide d'onde (7) de même nature que le second guide d'onde (6), disposé à la surface du substrat (3) de l'autre côté du premier guide (5) par rapport au second guide (6) ce second (6) et ce troisième (7) guides étant recombinés en sortie pour former un guide de sortie unique (8) et des moyens (12, 13, 14, 15) pour régler la phase relative des ondes véhiculées par ces deuxième (6) et troisième (7) guides avant leur recombinaison dans le guide de sortie (8).

5. Oscillateur paramétrique destiné à engendrer au moins deux ondes de fréquences respectives $\omega_s$ et $\omega_i$ à partir d'une onde incidente, dite onde de pompe, de fréquence $\omega_p$, caractérisé en ce qu'il comprend un dispositif coupleur optique intégré non linéaire comprenant au moins deux guides d'ondes, selon la revendication 1, ledit second guide (6) étant destiné à recevoir ladite onde incidente, dite onde de pompe de fréquence $\omega_p$, et ledit premier guide (5) étant destiné à transmettre par couplage lesdites deux ondes de fréquences respectives $\omega_s$ et $\omega_i$ telles que $\omega_p = \omega_s + \omega_i$; ledit oscillateur comportant en outre des dépôts réfléchissants (12, 13) respectivement déposés sur les faces d'entrée et de sortie dudit premier guide (5) pour réfléchir au moins l'une des deux ondes propagées dans ce premier guide (5), et des moyens de réglage de ces fréquences $\omega_s$ et $\omega_i$.

6. Oscillateur paramétrique selon la revendication 5, caractérisé en ce que ces moyens de réglage des fréquences $\omega_s$ et $\omega_i$ comportent des électrodes disposées de part et d'autre de ce premier (5) et de ce second guide (6) dans la partie où, ils sont parallèles.

7. Oscillateur paramétrique selon la revendication 5, caractérisé en ce qu'il comprend un troisième guide d'onde (30) de même nature que le premier guide d'onde (5), disposé à la surface du substrat (3) de l'autre côté du second guide (6) par rapport au premier guide (5), ce troisième guide (30) étant destiné à transmettre par couplage deux ondes de fréquences respectives $\omega_{s'}$ et $\omega_{i'}$; ledit oscillateur comportant en outre des dépôts réfléchissants (31, 32) respectivement déposés sur les faces d'entrée et de sortie dudit troisième guide (30) pour réfléchir au moins l'une des ondes propagées dans ce troisième guide (30), et des moyens de réglage de ces fréquences $\omega_{s'}$ et $\omega_{i'}$.

8. Oscillateur paramétrique selon la revendication 7, caractérisé en ce que ces moyens de réglage des fréquences comportent des électrodes disposées de part et d'autre de ces guides dans la partie où ils sont parallèles.

8

**Patentansprüche**

1. Integrierte, nichtlineare optische Kopplervorrichtung, die dazu bestimmt ist, ausgehend von einer ankommenden Welle (24) einer bestimmten Frequenz ($\omega$; $\omega_p$) wenigstens eine Welle (25, 26) einer verschiedenen Frequenz ($2\omega$; $\omega_s$, $\omega_i$) zu erzeugen, wobei diese Vorrichtung ein ebenes Substrat (3) mit einer Eintrittsfläche sowie einer Austrittsfläche umfaßt, das aus einem nichtlinearen, elektrooptischen Material besteht, und wenigstens zwei Wellenleiter (5, 6, 7, 30) umfaßt, wovon einer (5, 6) dazu bestimmt ist, diese ankommende Welle zu empfangen, und welche ebenfalls aus einem nichtlinearen elektrooptischen Material bestehen, wobei diese Wellenleiter in Bezug aufeinander und in Bezug auf das Substrat so angeordnet sind, daß die durch einen von ihnen empfangene ankommende Welle über ihr Streufeld mit dem nichtlinearen elektrooptischen Material in Wechselwirkung stehen kann, so daß in dem anderen Leiter diese Welle verschiedener Frequenz erzeugt wird, dadurch gekennzeichnet, daß jeder dieser Wellenleiter auf der Oberfläche dieses Substrats angeordnet ist, wobei diese Leiter auf einer vorbestimmten Lange (L) zueinander parallel sind und sie durch einen solchen Abstand voneinander getrennt sind, daß er diese nichtlineare Wechselwirkung ermöglicht, die dazu geeignet ist, die erwünschte Frequenzumwandlung zu verursachen, und daß dieses Substrat aus Lithiumniobat oder aus Lithiumtantalat besteht, wobei ein erster (5, 30) dieser Wellenleiter durch Ionenaustausch von Ionen H+ in diesem Substrat (3) erhalten werden kann und der zweite (6, 7) dieser Wellenleiter durch lokalisierte Titan-Diffusion in dieses Substrat erhalten werden kann.

2. Vorrichtung nach Anspruch 1, dazu bestimmt, eine Welle (25) einer Frequenz $2\omega$ aus einer ankommenden Welle (24) einer Frequenz $\omega$ zu erzeugen, dadurch gekennzeichnet, daß dieser erste Leiter (5) dazu bestimmt ist, diese ankommende Welle (24) einer Frequenz $\omega$ zu empfangen, während dieser zweite Leiter (6) dazu bestimmt ist, diese Welle (25) einer Frequenz $2\omega$ welche durch Koppelung erzeugt wird, zu übertragen, wobei diese Vorrichtung ferner Mittel umfaßt, um ein veränderliches elektrisches Feld an wenigstens einen dieser beiden Leiter in dem Teil anzulegen, in welchem sie zueinander parallel sind, damit die Phasenabstimmung zwischen der ankommenden Welle (24) einer Frequenz $\omega$ und der Welle (25) einer Frequenz $2\omega$ welche durch Koppelung erzeugt wird, auf diese Weise verwirklicht wird.

3. Vorrichtung nach Anspruch 2, dadurch gekennzeichnet, daß - da das Substrat aus einem doppelbrechenden Material besteht - diese Mittel zum Anlegen eines veränderlichen elektrischen Feldes an wenigstens einen der beiden Leiter aus Elektroden (28, 29) bestehen, welche beiderseits dieses Leiters angeordnet sind, wobei diese Elektroden in dem Substrat eine Polarisation erzeugen, welche zu der Achse, die den außenordentlichen Brechungsindex dieses Substrats (3) aufweist, parallel ist.

4. Vorrichtung nach Anspruch 2, dadurch gekennzeichnet, daß sie einen dritten Wellenleiter (7) von gleicher Art wie der zweite Wellenleiter (6) aufweist und auf der Oberfläche des Substrats (3) auf der anderen Seite des ersten Leiters (5) in Bezug auf den zweiten Leiter (6) angeordnet ist, wobei dieser zweite Leiter (6) sowie dieser dritte Leiter (7) an dem Austritt wieder vereint werden, um einen einzigen Austrittsleiter (8) zu bilden, und Mittel (12, 13, 14, 15) umfaßt, um die relative Phase der durch diesen zweiten Leiter (6) sowie durch diesen dritten Leiter (7) beforderten Wellen vor ihrer Rekombination in dem Austrittsleiter (8) einzustellen.

5. Parametrischer Oszillator, der dazu bestimmt ist, wenigstens zwei Wellen der Frequenz $\omega_s$ bzw. $\omega_i$ aus einer als Pumpwelle bezeichneten ankommenden Welle einer Frequenz $\omega_p$ zu erzeugen, dadurch gekennzeichnet, daß er eine integrierte, nichtlineare optische Kopplervorrichtung mit wenigstens zwei Wellenleitern nach Anspruch 1 umfaßt, wobei der zweite Leiter (6) dazu bestimmt ist, die als Pumpenwelle einer Frequenz $\omega_p$ bezeichnete ankommende Welle zu empfangen, und der erste Leiter (5) dazu bestimmt ist, diese beiden Wellen $\omega_s$ bzw. $\omega_i$ einer Frequenz s durch Koppelung zu übertragen, so daß $\omega_p = \omega_s + \omega_i$; wobei dieser Oszillator ferner reflektierende Überzüge (12, 13) umfaßt, welche auf der Eintrittsfläche bzw. der Austrittsfläche dieses ersten Leiters (5) angebracht sind, um wenigstens eine der beiden Wellen, welche sich in diesem ersten Leiter (5) ausbreiten, zu reflektieren, sowie Mittel zur Einstellung dieser Frequenzen $\omega_s$ und $\omega_i$ umfaßt.

6. Parametrischer Oszillator nach Anspruch 5, dadurch gekennzeichnet, daß diese Mittel zur Einstellung der Frequenzen $\omega_s$ und $\omega_i$ Elektroden umfassen, welche beiderseits des ersten Leiters (5) und des zweiten Leiters (6) in dem Teil, in welhem sie zueinander parallel sind, angeordnet sind.

7. Parametrischer Oszillator nach Anspruch 5, dadurch gekennzeichnet, daß er einen dritten Wellenleiter (30) von gleicher Art wie der erste Wellenleiter (5) umfaßt, der auf der Oberfläche des Substrats auf der von dem zweiten Leiter (6) abgewandten Seite in Bezug auf den ersten Leiter (5) angeordnet ist, wobei dieser dritte Leiter (30) dazu bestimmt ist, zwei Hellen der Frequenz $\omega_s$ bzw. $\omega_i$ durch Koppelung zu übertragen; wobei der Oszillator ferner reflektierende Überzüge (31, 32) umfaßt, welche jeweils auf der Eintrittsfläche bzw. Austrittsfläche dieses dritten Leiters (30) angebracht sind, um wenigstens eine der in diesem dritten Leiter (30) beförderten Wellen zu reflektieren, sowie Mittel zur Einstellung dieser Frequenzen $\omega_s$ und $\omega_i$ umfaßt.

8. Parametrischer Oszillator nach Anspruch 7, dadurch gekennzeichnet, daß diese Mittel zur Einstellung der Frequenzen Elektroden umfassen, welche beiderseits dieser Leiter in dem Teil, wo sie zueinander parallel sind, angeordnet sind.

## EP 0 112 732 B1

### Claims

1. A non-linear integrated optic coupler device adapted to create, starting from an incident wave (24) with a given frequency ($\omega$; $\omega_p$) at least one wave (25 and 26) of a different frequency ($2\omega$; $\omega_s$, $\omega_i$), the said device comprising a planar substrate (3) having an input face and an output face, made of non-linear electrooptic material, and at least two wave guides (5 and 6, 7 and 30) of which one (5 and 6) is adapted to receive the said incident wave, also made of non-linear electrooptic material, the said wave guides being operated in relation to each other and in relation to the said substrate in such a manner that the incident wave received by one of them is able to interact via its evanescent field with the non-linear electrooptic material in such a manner as to generate, within the other guide, the said wave with a different frequency, characterized in that the said wave guides are placed respectively at the surface of the said substrate, these guides being parallel to each other along a predetermined length (L,) and being separated from each other by a distance such as to permit the said non-linear interaction suitable to maintain the desired frequency conversion, and in that the said substrate is made of lithium niobate or lithium tantalate, a first one (5 and 30) of these said guides being able to be obtained by an ionic exchange of H+ ions in the said substrate (3) and the second one (6 and 7) of the said guides being obtained by localized diffusion of titanium in the said substrate.

2. The device as claimed in claim 1 adapted to create a wave (25) of a frequency $2\omega$ starting from an incident wave (24) with a frequency of $\omega$, characterized in that the said first guide (5) is adapted to receive the said incident wave (24) with the frequency $\omega$, while however the said second guide (6) is adapted to transmit the said wave (25) with a frequency $2\omega$ created by coupling, the said device comprising furthermore means to apply a variable electric field to at least one of the two guides in the part where they are parallel to each other in order thus to cause the incident wave (24) with the frequency $\omega$ to be in phase with the wave (25) with a frequency of $2\omega$ created by coupling.

3. The device as claimed in claim 2, characterized in that the substrate is made of a birefringent material, the means for applying a variable electric field to at least one the two guides being constituted by electrodes (28 and 29) placed at the two sides of this guide, said electrodes creating, in the substrate, a polarization parallel to the axis which bears the extraordinary index of this substrate (3).

4. The device as claimed in claim 2, characterized in that it comprises a third wave guide (7) of the same nature as the second wave guide (6), placed at the surface of the substrate (3) on the other side of the first guide (5) in relation to the second guide (6), the second (6) and third (7) guides being combined in such a manner as to form a single output guide (8), and means (12, 13, 14 and 15) in order to regulate the relative phase of the waves carried by the second (6) and third (7) guides prior to their recombination in the output guide (8).

5. A parametric oscillator adapted to create at least two waves with respective frequencies $\omega_s$ and $\omega_i$ starting from an incident wave, termed the pumping wave, with a frequency $\omega_p$, characterized in that it comprises a non-linear integrated optic coupler having at least two wave guides, as claimed in claim 1, the said second wave guide (6) being designed to receive the said incident wave, termed the pumping wave with a frequency $\omega_p$, and the said first wave guide (5) being adapted to transmit the said two respective waves with the frequencies $\omega_s$ and $\omega_i$ such that $\omega_p = \omega_i$, the said oscillator furthermore comprising reflecting deposits (12 and 13) respectively placed on the input and the output faces of the said first guide (5) in order to reflect at least one of the waves propagated in the first guide (5) and means to regulate these two frequencies $\omega_s$ and $\omega_i$.

6. The oscillator as claimed in claim 5 characterized in that the regulating means for the frequencies $\omega_s$ adn $\omega_i$ comprise electrodes placed on the two sides of the first guide (5) and of the second guide (6) in the part where they are parallel.

7. The parametric oscillator as claimed in claim 5, characterized in that it comprises a third wave guide (30) of the same nature as the first wave guide (5), placed on the surface of the substrate (3) on the other side of the second guide (6) in relation to the first guide (5), this third guide (30) being adapted to transmit two waves with respective frequencies $\omega_{s'}$ and $\omega_{i'}$; the said oscillator furthermore comprising reflecting deposits (31 and 32) respectively placed on the input and output surfaces of the said third guide (30) in order to reflect at least one of the waves propagated in this third guide (30), and means for regulating these frequencies $\omega_{s'}$ and $\omega_{i'}$.

8. The parametric oscillator as claimed in claim 7, characterized in that the frequency regulating means comprise electrodes placed on the two sides of these guides in the part where they are parallel.

# FIG.1

# FIG. 2

# FIG.3

# FIG.4

# FIG.5

# FIG.6